# EUROPÄISCHE PATENTSCHRIFT

(11) **EP 4 264 888 B1**
(45) Veröffentlichungstag und Bekanntmachung des Hinweises auf die Patenterteilung: **10.09.2025**
(21) Anmeldenummer: 22700576.6
(22) Anmeldetag: 05.01.2022
(51) Int. Cl.: H04W 84/18, H04L 12/28

(54) **SYSTEM ZUR HAUSAUTOMATISATION**
HOME AUTOMATION SYSTEM
SYSTÈME D'AUTOMATISATION DOMOTIQUE

(30) Priorität: 11.01.2021 DE 102021100300
(43) Veröffentlichungstag der Anmeldung: 25.10.2023
(73) Patentinhaber: SCHNEIDER ELECTRIC INDUSTRIES SAS, 92500 Rueil-Malmaison (FR)
(72) Erfinder: FUTANE, Virupaksha, 50968 Köln (DE)
(74) Vertreter: Manitz Finsterwald Patent- und Rechtsanwaltspartnerschaft mbB
(86) Internationale Anmeldenummer: PCT/EP2022/050113
(87) Internationale Veröffentlichungsnummer: WO 2022/148760

(56) Entgegenhaltungen:
- US-A1- 2019 373 435

## Beschreibung

Die vorliegende Erfindung betrifft ein System zur Hausautomatisation, welches mehrere Endgeräte, welche miteinander über ein Mesh-Netzwerk kommunizieren, umfasst. Die Endgeräte sind ausgebildet, Aktionen in der Hausautomatisation durchzuführen und/oder für die Hausautomatisation benötigte Daten zu erfassen. Das System umfasst ferner ein Verbindungsgerät, welches ausgebildet ist, mit den Endgeräten über das Mesh-Netzwerk zu kommunizieren.

Ein System gemäß dem Oberbegriff des Anspruchs 1 ist in der US 2019/373435 A1 offenbart.

Systeme zur Hausautomatisation sind grundsätzlich bekannt. In diesem Bereich hat sich z.B. die Technologie von ZigBee-Netzwerken etabliert. Durch ZigBee-Netzwerke werden sogenannte Mesh-Netzwerke (d.h. vermaschte Netzwerke) geschaffen. Ein Vorteil der Mesh-Netzwerke ist, dass grundsätzlich jedes Gerät in dem Mesh-Netzwerk mit jedem anderen Gerät kommunizieren kann, indem Daten über mehrere Geräte hinweg weitergeleitet werden, bis sie das Zielgerät erreichen.

Bei solchen Systemen zur Hausautomatisation ist es beispielsweise möglich, eine Steuerung von Licht, Jalousien, Rollos, Sonnenschutzvorrichtungen und dergleichen vorzunehmen. Systeme zur Hausautomatisation können auch Sensoren umfassen, die beispielsweise Windgeschwindigkeiten oder Lichtverhältnisse erfassen, um dann z.B. entsprechend Jalousien zu öffnen oder zu schließen.

Um eine Datenverbindung mit dem Mesh-Netzwerk zur Hausautomatisation herzustellen, ist üblicherweise eine sogenannte "Bridge" notwendig, da Smartphones nicht in der Lage sind z.B. über ZigBee zu kommunizieren. Die Bridge empfängt z.B. Daten aus einem WLAN und erzeugt aus den empfangenen Daten Befehle für die Hausautomatisation.

Dabei ist nachteilig für den Benutzer, dass das Verbindungsgerät separat angeschafft und unterhalten werden muss. Zudem muss das Verbindungsgerät an einer Stelle positioniert sein, an welcher es eine gute (Funk-)Verbindung zu dem Mesh-Netzwerk aufbauen kann.

Es ist daher die der Erfindung zugrundeliegende Aufgabe, ein System zur Hausautomatisation anzugeben, welches einfacher aufgebaut und mit geringerem Aufwand steuerbar ist.

Diese Aufgabe wird durch ein System gemäß Anspruch 1 gelöst.

Erfindungsgemäß ist insbesondere vorgesehen, dass das Verbindungsgerät ausgebildet ist, mit einem Bediengerät über eine, bevorzugt direkte, Punkt-zu-Punkt-Verbindung zur Steuerung der Hausautomatisation zu kommunizieren. Zudem ist das Verbindungsgerät ausgebildet, eine, insbesondere direkte und/oder unmittelbare, Kommunikation des Bediengeräts mit zumindest einem Endgerät zu ermöglichen, indem das Verbindungsgerät von dem Bediengerät über die Punkt-zu-Punkt-Verbindung erhaltene Daten mittels des Mesh-Netzwerks an das entsprechende Endgerät weiterleitet und/oder von dem entsprechenden Endgerät erhaltene Daten mittels der Punkt-zu-Punkt-Verbindung an das Bediengerät weiterleitet.

Durch das Verbindungsgerät kann also eine Umsetzung von Daten der Punkt-zu-Punkt-Verbindung (z.B. Bluetooth oder Bluetooth Low Energy, BLE) auf das Mesh-Netzwerk (z.B. ZigBee oder dergleichen) erfolgen. Das Verbindungsgerät kann dabei, wie nachfolgend ausgeführt, gleichzeitig ein Endgerät sein. Erfindungsgemäß ist dabei von Vorteil, dass durch die Punkt-zu-Punkt-Verbindung zu dem Verbindungsgerät eine direkte Verbindung z.B. mit einem Mobiltelefon des Bedieners ermöglicht wird, wodurch der Bediener dann grundsätzlich mit jedem Endgerät eine Bluetooth-/Punkt-zu-Punkt-Verbindung aufbauen kann und die Steuerung der Hausautomatisation vornehmen kann. Es ergibt sich für den Benutzer somit der Vorteil, dass die Punkt-zu-Punkt-Verbindung grundsätzlich überall in der Nähe eines Endgeräts aufgebaut werden kann, wodurch die Kommunikation mit dem Mesh-Netzwerk vereinfacht wird. Zudem kann, wenn das Verbindungsgerät ein Endgerät ist, eine üblicherweise notwendige Bridge eingespart werden, was zur Kosten- und Materialreduktion beiträgt.

Von Vorteil ist weiterhin, dass die Punkt-zu-Punkt-Verbindung mit einem herkömmlichen Smartphone aufgebaut werden kann. Im Betrieb des Systems zur Hausautomatisation kann also z.B. mit einem Smartphone/Bediengerät eine Punkt-zu-Punkt-Verbindung zu dem Verbindungsgerät aufgebaut werden. Das Verbindungsgerät dient dabei dazu, von dem Bediengerät erhaltene Daten zur Steuerung der Hausautomatisation an das Mesh-Netzwerk weiterzuleiten (und umgekehrt). Das Verbindungsgerät kann dazu, wie später noch genauer ausgeführt, die über die Punkt-zu-Punkt-Verbindung erhaltenen Daten so umsetzen und/oder verpacken, dass eine Weiterleitung über das Mesh-Netzwerk bis zu dem jeweiligen Endgerät möglich ist. Das Endgerät kann dann entsprechend konfiguriert sein, um die so erhaltenen Daten korrekt zu interpretieren und eine entsprechende Aktion vorzunehmen.

Das erfindungsgemäße System kann auch das Bediengerät umfassen.

Es versteht sich, dass bei den hierin genannten Verbindungen Datenverbindungen gemeint sind, sofern nicht explizit etwas anderes ausgeführt ist.

Unter einer Punkt-zu-Punkt-Verbindung ist insbesondere eine Funkverbindung zwischen genau zwei Geräten, beispielsweise dem Verbindungsgerät und dem Bediengerät, gemeint. Bei der Punkt-zu-Punkt-Verbindung sind bevorzugt keine weiteren Geräte zur Datenweiterleitung zwischengeschaltet.

Bei dem Mesh-Netzwerk hingegen können die Endgeräte jeweils mittels einer Funkverbindung mit ein oder mehreren anderen Endgeräten (d.h. Geräten des Mesh-Netzwerks) kommunizieren. Stellt ein Endgerät fest, dass ein Datenpaket bzw. dass Daten für ein anderes Endgerät bestimmt sind, so leitet das Endgerät die Daten weiter. In dem Mesh-Netzwerk kann jedes Endgerät mit bevorzugt mehreren anderen Endgeräten verbunden sein. Hierdurch entsteht ein sogenanntes vermaschtes Netz, welches es jedem Endgerät ermöglicht, mit jedem anderen Endgerät des Mesh-Netzwerks durch Vermittlung der übrigen Endgeräte zu kommunizieren.

Unter einer direkten oder unmittelbaren Kommunikation des Bediengeräts mit einem Endgerät ist insbesondere zu verstehen, dass sich die Kommunikation für das Bediengerät und das Endgerät so darstellt, als ob beide Geräte direkt bzw. unmittelbar (d.h. ohne das zwischengeschaltete Verbindungsgerät und eventuelle zwischengeschaltete andere Endgeräte) kommunizieren.

Weitere Ausführungsformen der Erfindung sind der Beschreibung, den Zeichnungen sowie den Unteransprüchen zu entnehmen.

Gemäß einer Ausführungsform ist das Verbindungsgerät ein Endgerät. Wie bereits oben angedeutet, kann ein Endgerät die Funktion des Verbindungsgeräts übernehmen. Das Verbindungsgerät fungiert somit zugleich als Endgerät und als Verbindungsgerät.

Dass das Verbindungsgerät ein Endgerät ist, bedeutet insbesondere, dass die Funktionalität des Verbindungsgeräts vollständig in dem Endgerät integriert ist, so dass beispielsweise die Funktionalität des Verbindungsgeräts in demselben Gehäuse angeordnet ist, wie die des Endgeräts. Beispielsweise kann eine Funkeinrichtung des Endgeräts sowohl zur Kommunikation mit dem Mesh-Netzwerk als auch zur Kommunikation über die Punkt-zu-Punkt-Verbindung ausgebildet sein.

Bei den Endgeräten kann es sich bevorzugt um Aktoren und/oder Sensoren der Hausautomatisation handeln, also beispielsweise um schaltbare Steckdosen, Dimmer, Leuchtmittel, Temperatursensoren und dergleichen. Bevorzugt können auch mehrere (z.B. mehr als 30% oder 50% der Endgeräte) oder sogar alle Endgeräte des Mesh-Netzwerks Verbindungsgeräte sein. Sofern mehrere Endgeräte als Verbindungsgeräte konfiguriert sind, kann das Bediengerät immer mit einem jeweils in der Nähe befindlichen Verbindungsgerät verbunden sein, um beispielsweise in allen Zimmern eines Hauses eine Verbindung mit dem Mesh-Netzwerk herstellen zu können. Hierdurch ist dann an praktisch jeder Position innerhalb eines Hauses eine Steuerung der Hausautomatisation möglich.

Erfindungsgemäß ist das Verbindungsgerät ausgebildet, ein über die Punkt-zu-Punkt-Verbindung empfangenes Daten-Objekt in ein Daten-Objekt für das Mesh-Netzwerk zu verpacken. Alternativ oder zusätzlich kann erfindungsgemäß das Verbindungsgerät ausgebildet sein, ein über das Mesh-Netzwerk empfangenes Daten-Objekt in ein Daten-Objekt für die Punkt-zu-Punkt-Verbindung zu verpacken. Das Umsetzen eines Daten-Objekts kann in der Applikations-Schicht (d.h. im "Application Layer") des OSI-Schichtenmodells erfolgen.

Die oben genannten Daten, welche von dem Verbindungsgerät weitergeleitet werden, können Daten-Objekte enthalten. Üblicherweise kann beispielsweise ein Header für die Daten an die Punkt-zu-Punkt-Verbindung oder das Mesh-Netzwerk angepasst werden. Der Header kann bevorzugt eine Adresse des Endgeräts enthalten, für das die Daten bestimmt sind.

Durch das Verpacken der Daten-Objekte kann beispielsweise ein Tunneln der über die Punkt-zu-Punkt-Verbindung empfangenen Daten durch das Mesh-Netzwerk ermöglicht werden ("Bluetooth Low Energy over ZigBee"). Die Endgeräte und das Bediengerät können jeweils ausgebildet sein, die jeweiligen Daten zu empfangen und korrekt zu verarbeiten, d.h. die getunnelten Daten korrekt zu interpretieren.

Gemäß einer weiteren Ausführungsform ist das Verbindungsgerät ausgebildet, beim Weiterleiten von Daten, in den Daten enthaltene Nutzdaten zumindest zum Teil unverändert zu belassen. Dies bedeutet, dass die Nutzdaten beispielsweise lediglich mit einem anderen Header versehen werden und dann von der Punkt-zu-Punkt-Verbindung an das Mesh-Netzwerk (oder umgekehrt) übergeben werden. Dies besitzt den Vorteil, dass die Endgeräte und das Bediengerät mit denselben Nutzdaten arbeiten können, unabhängig davon, über welche Datenverbindung die Nutzdaten übertragen werden. Die Endgeräte und das Bediengerät können dann ausgebildet sein, die jeweiligen Nutzdaten zu verarbeiten. Beispielsweise kann ein Endgerät aus den Nutzdaten schließen, dass es eine Steckdose abschalten, eine Beleuchtung aktivieren oder eine sonstige Aktion ausführen soll. Neben dem Hinzufügen eines Headers können beispielsweise auch die für ein jeweiliges verwendetes Übertragungsprotokoll notwendigen Daten verändert oder hinzugefügt werden.

Die beispielsweise über die Punkt-zu-Punkt-Verbindung empfangenen Daten können somit gekapselt über das Mesh-Netzwerk übertragen werden. Werden Daten von dem Mesh-Netzwerk an die Punkt-zu-Punkt-Verbindung weitergeleitet, so kann die Kapselung im Verbindungsgerät entfernt und die Daten dementsprechend an das Bediengerät weitergeleitet werden.

Gemäß einer weiteren Ausführungsform ist, wie oben schon erwähnt, die Punkt-zu-Punkt-Verbindung eine Bluetooth- oder Bluetooth-Low-Energy-Verbindung. Zudem kann das Mesh-Netzwerk ein ZigBee-Netzwerk sein. Es sind aber auch andere Punkt-zu-Punkt-Verbindungen oder andere Mesh-Netzwerke (z.B. Z-Wave) möglich. Weiterhin kann das Bediengerät ein Smartphone oder ein Tablet sein. Schließlich ist das Endgerät bevorzugt ein Leuchtmittel, ein elektrischer Schalter, ein Dimmer oder ein Sensor.

Das Bediengerät kann also bevorzugt ein mobiles Gerät sein, wobei beispielsweise eine direkte Bluetooth-Low-Energy-(BLE-)Verbindung zwischen dem Smartphone und dem Verbindungsgerät hergestellt wird.

Zur Erstellung der Bluetooth-Verbindung kann ein Pairing zwischen dem Verbindungsgerät und dem Bediengerät notwendig sein. Insbesondere kann ein Pairing zwischen allen Verbindungsgeräten und dem Bediengerät durchgeführt werden. Es ist auch möglich, mittels des Mesh-Netzwerks sämtliche Verbindungsgeräte in einen Pairing-Modus zu versetzen, wobei dann das Bediengerät jeweils in Reichweite aller Verbindungsgeräte gebracht wird (z.B. durch Bewegen des Smartphones durch das Haus), wodurch relativ schnell ein Pairing mit sämtlichen Verbindungsgeräten durchgeführt werden kann.

Gemäß einer weiteren Ausführungsform weist das Verbindungsgerät eine Funkeinrichtung auf, wobei für die Punkt-zu-Punkt-Verbindung und das Mesh-Netzwerk dieselbe Funkeinrichtung von dem Verbindungsgerät verwendet wird. Das Verbindungsgerät kann also nur genau eine Funkeinrichtung (z.B. einen Transceiver) aufweisen. Hierdurch wird im Verbindungsgerät weniger Platz beansprucht, zudem kann das Verbindungsgerät kostengünstiger hergestellt werden.

Die Funkeinrichtung kann über eine Datenverbindung mit einer Recheneinrichtung des Verbindungsgeräts gekoppelt sein. Die Recheneinrichtung kann über die Dateneinrichtung mittels der Punkt-zu-Punkt-Verbindung und dem Mesh-Netzwerk empfangene Daten erhalten. Weiterhin kann die Recheneinrichtung das Umsetzen oder Verpacken der Daten-Objekte durchführen. Die Recheneinrichtung kann dann zu versendende Daten über die Datenverbindung an die Funkeinrichtung übergeben und die Funkeinrichtung anweisen, die Daten über die Punkt-zu-Punkt-Verbindung oder das Mesh-Netzwerk zu versenden. Schließlich kann die Recheneinrichtung zugleich auch den Betrieb eines als Endgerät ausgebildeten Verbindungsgeräts überwachen und steuern.

Gemäß einer weiteren Ausführungsform ist die Funkeinrichtung ausgebildet, dieselbe Antennenanordnung für die Punkt-zu-Punkt-Verbindung und das Mesh-Netzwerk zu verwenden. Die Funkeinrichtung benötigt dementsprechend nicht verschiedene Antennenanordnungen für die Punkt-zu-Punkt-Verbindung und das Mesh-Netzwerk. Auch hierdurch kann Platz eingespart werden. Überdies kann der Produktionsaufwand verringert werden. Die Nutzung derselben Antennenanordnung ist beispielsweise bei Bluetooth und ZigBee aufgrund desselben physikalischen Layers (phy) und der damit verbundenen selben bzw. ähnlichen Frequenzen gut möglich.

Gemäß einer weiteren Ausführungsform ist die Funkeinrichtung ausgebildet, Daten abwechselnd mittels eines Zeitschlitzverfahrens über die Punkt-zu-Punkt-Verbindung und das Mesh-Netzwerk zu senden und/oder zu empfangen. Die Funkeinrichtung kann also ausgebildet sein, ein TDM (Time Division Multiplexing) durchzuführen. Durch das Zeitschlitzverfahren können die Timing-Anforderungen sowohl der Punkt-zu-Punkt-Verbindung als auch des Mesh-Netzwerks erfüllt werden. Eine Funkeinrichtung, welche ein solches Zeitschlitzverfahren für die Punkt-zu-Punkt-Verbindung und für das Mesh-Netzwerk ermöglicht, ist beispielsweise in der Familie ERF32 der Firma Silicon Labs verfügbar.

Gemäß einer weiteren Ausführungsform umfasst das System mehrere Verbindungsgeräte, wobei das System ausgebildet ist, genau eine Punkt-zu-Punkt-Verbindung zwischen genau einem Verbindungsgerät und dem Bediengerät herzustellen. Das Endgerät bzw. das Verbindungsgerät, zu dem die Punkt-zu-Punkt-Verbindung hergestellt wird, kann sich aber ändern, zum Beispiel um einer Bewegung des Nutzers Rechnung zu tragen. Hierbei kann bei einer Bewegung des Nutzers in einem anderen Raum auf ein neues Verbindungsgerät umgeschaltet werden. Beim Umschalten kann das Bediengerät dann mit zwei Verbindungsgeräten kurzzeitig über zwei Punkt-zu-Punkt-Verbindungen kommunizieren. Alternativ kann die erste Punkt-zu-Punkt-Verbindung zunächst vollständig abgebaut werden, bevor eine weitere (neue) Punkt-zu-Punkt-Verbindung aufgebaut wird.

Gemäß einer weiteren Ausführungsform ist das Bediengerät ausgebildet, die von dem Endgerät empfangenen Daten zu verarbeiten, und das Endgerät ist ausgebildet, die von dem Bediengerät empfangenen Daten zu verarbeiten. Das Endgerät und das Bediengerät sind also eingerichtet, die vom jeweiligen Gegenpart erhaltenen Daten korrekt zu verarbeiten. Hierfür kann die Soft- und/oder Firmware der jeweiligen Geräte aneinander angepasst ausgestaltet sein. Mit dem Bediengerät kann über die Daten das Verhalten der Endgeräte gesteuert werden, d.h. es kann eine Konfiguration und/oder Veränderung der Endgeräte vorgenommen werden. Umgekehrt können die Endgeräte in der Lage sein, Statusinformationen, beispielsweise Temperaturmesswerte oder Einstellungswerte, an das Bediengerät zu senden.

Gemäß einer weiteren Ausführungsform ist das Bediengerät ausgebildet, eine Verbindung mit einem Cloud-Dienst herzustellen, wobei ein weiteres Bediengerät mit dem Cloud-Dienst kommuniziert, wobei Daten zur Steuerung der Endgeräte mittels des Bediengeräts von dem Cloud-Dienst empfangen und über die Punkt-zu-Punkt-Verbindung an das Verbindungsgerät weitergeleitet werden. Das Bediengerät kann also dazu dienen, eine Verbindung mit dem Cloud-Dienst herzustellen. Hierfür kann das Bediengerät eine Kommunikationsverbindung zu dem Cloud-Dienst herstellen, um z.B. einen Port in einer Firewall des jeweiligen Routers eines Haushalts zu öffnen und somit die Kommunikation mit dem Cloud-Dienst zu ermöglichen. Über das weitere Bediengerät kann ein Benutzer dann beispielsweise von unterwegs, insbesondere über eine Internetverbindung, mit dem Cloud-Dienst kommunizieren. Durch die Kommunikation mit dem Cloud-Dienst ist es dann auch von unterwegs/extern möglich, Daten von dem weiteren Bediengerät an den Cloud-Dienst, von dem Cloud-Dienst an das Bediengerät und von dem Bediengerät wiederum an das Verbindungsgerät zu senden, um auf diese Weise eine Steuerung der Hausautomatisation zu ermöglichen. Ein Benutzer kann also auch von unterwegs beispielsweise Jalousien schließen oder eine Beleuchtung aktivieren oder deaktivieren.

Kurz gesagt werden bei der Verwendung des Cloud-Dienstes Daten zur Hausautomatisation zwischen dem Verbindungsgerät und dem Bediengerät, zwischen dem Bediengerät und dem Cloud-Dienst und zwischen dem Cloud-Dienst und dem weiteren Bediengerät ausgetauscht. '

Gemäß einer weiteren Ausführungsform umfasst eine Steuerung der Hausautomatisation
- eine direkte Steuerung eines Endgeräts,
- eine Automatisierung der Steuerung von einem oder mehreren Endgeräten,
- ein Auslesen von Zustandswerten eines Endgeräts, und/oder
- ein Verändern einer Soft- und/oder Firmware eines Endgeräts.

Eine direkte Steuerung eines Endgeräts kann beispielsweise umfassen, eine schaltbare Steckdose zu aktivieren oder zu deaktivieren, Jalousien zu bewegen und dergleichen. Eine direkte Steuerung kann also eine Aktivierung oder Deaktivierung eines Aktors oder das Auslesen eines Sensors umfassen.

Unter der Automatisierung der Steuerung von einem oder mehreren Endgeräten ist zu verstehen, dass zu bestimmten Uhrzeiten vorgegebene Abläufe erfolgen und/oder basierend auf vorbestimmten Ereignissen (z.B. das Herunterlassen einer Jalousie) andere vorbestimmte Aktionen ausgeführt werden (wie beispielsweise das Aktivieren der Beleuchtung). Solche Automatisierungsfunktionen, die auch "Szenen" genannt werden, können direkt in den jeweiligen Endgeräten des Systems zur Hausautomatisation gespeichert werden. Ebenfalls ist es möglich, über den Cloud-Dienst Automatisierungsfunktionen zu steuern. So können z.B. beim Verlassen des Hauses die Jalousien geschlossen und die Lichter gedimmt werden. Das Verlassen des Hauses kann bevorzugt von dem weiteren Bediengerät z.B. Anhand der GPS-Position erkannt werden.

Zudem ist es auch möglich, direkt mit dem Bediengerät z.B. eine neuere Soft- und/oder Firmware auf die Endgeräte aufzuspielen, um auf diese Weise z.B. neue Funktionen freizuschalten.

Weiterer Gegenstand der Erfindung ist ein Verfahren zur Hausautomatisation, bei welchem
- mehrere Endgeräte miteinander über ein Mesh-Netzwerk kommunizieren,
- die Endgeräte Aktionen in der Hausautomatisation durchführen und/oder für die Hausautomatisation benötigte Daten erfassen,
- zumindest ein Verbindungsgerät mit den Endgeräten über das Mesh-Netzwerk kommuniziert.

Das Verfahren zeichnet sich dadurch aus, dass das Verbindungsgerät mit einem Bediengerät über eine, bevorzugt direkte, Punkt-zu-Punkt-Verbindung zur Steuerung der Hausautomatisation kommuniziert und das Verbindungsgerät eine, bevorzugt direkte und/oder unmittelbare, Kommunikation des Bediengeräts mit zumindest einem Endgerät ermöglicht, indem das Verbindungsgerät von dem Bediengerät über die Punkt-zu-Punkt-Verbindung erhaltene Daten mittels des Mesh-Netzwerks an das entsprechende Endgerät weiterleitet und/oder von dem entsprechenden Endgerät erhaltene Daten mittels der Punkt-zu-Punkt-Verbindung an das Bediengerät weiterleitet.

Die zu dem erfindungsgemäßen System getroffenen Aussagen gelten entsprechend für das erfindungsgemäße Verfahren. Dies gilt insbesondere für Ausführungsformen und Vorteile.

Nachfolgend wird die Erfindung rein beispielhaft unter Bezugnahme auf die Zeichnungen beschrieben. Es zeigen:
- Fig. 1: schematisch in einem Haus integrierte Komponenten eines Systems zur Hausautomatisation;
- Fig. 2: Verbindungen mittels eines Mesh-Netzwerks und einer Punkt-zu-Punkt-Verbindung zwischen Endgeräten zur Hausautomatisation und einem Bediengerät;
- Fig. 3: schematisch die Umsetzung von über eine Punkt-zu-Punkt-Verbindung empfangenen Daten auf ein Mesh-Netzwerk; und
- Fig. 4: schematisch die Ansteuerung eines Systems zur Hausautomatisation über einen Cloud-Dienst.

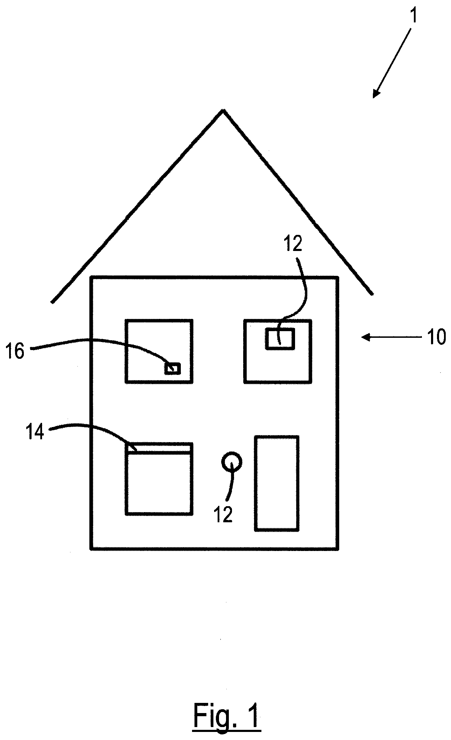

Fig. 1 zeigt ein in einem Wohnhaus 1 angeordnetes System zur Hausautomatisation 10. Das System 10 ermöglicht es zwei Leuchten 12 und eine Jalousie 14 zu steuern. Mittels eines Helligkeitssensors 16 können Helligkeitswerte erfasst und für die Hausautomatisation verwendet werden.

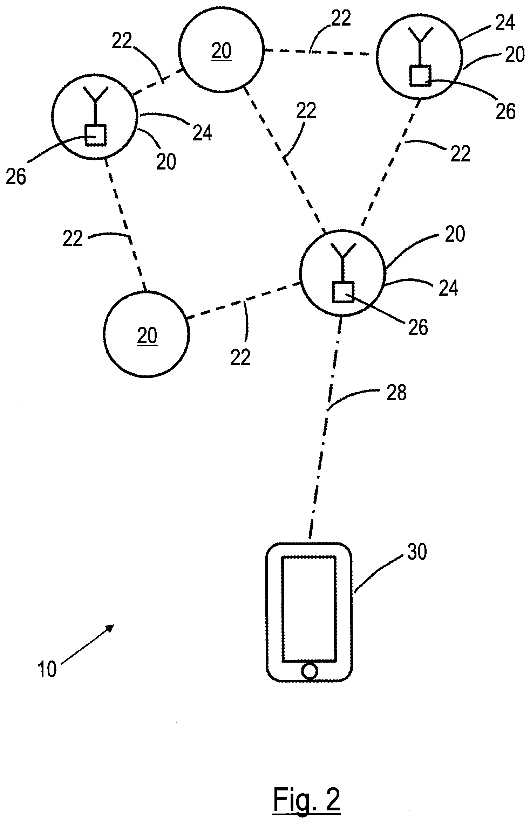

Fig. 2 zeigt Endgeräte 20 des Systems 10, welche beispielsweise als Schalter für die Leuchten 12 oder für die Jalousie 14 ausgebildet sein können. Eines der Endgeräte 20 kann zudem auch als der Helligkeitssensor 16 ausgebildet sein. Jedes der Endgeräte 20 verfügt über eine Funkeinrichtung zur Herstellung eines Mesh-Netzwerks 22. Von dem Mesh-Netzwerk 22 sind die jeweils vorhandenen Funkverbindungen zwischen den Endgeräten 20 in Fig. 2 dargestellt. Es ist zu erkennen, dass jedes Endgerät 20 mit zumindest einem anderen Endgerät über das Mesh-Netzwerk 22 verbunden ist. Eine direkte Verbindung zwischen allen Endgeräten 20 ist jedoch nicht gegeben. Durch Weiterleitung von Daten über zwischengeschaltete Endgeräte 20 ist jedoch eine Kommunikation aller Endgeräte 20 untereinander möglich.

Ein Teil der Endgeräte 20 ist zudem als Verbindungsgerät 24 ausgebildet. Die Verbindungsgeräte 24 umfassen eine einzige Funkeinrichtung 26, welche ausgebildet ist neben der Verbindung mit dem Mesh-Netzwerk 22 auch eine Punkt-zu-Punkt-Verbindung 28 herzustellen.

Bei dem Mesh-Netzwerk 22 handelt es sich um ein ZigBee-Netzwerk, wohingegen die Punkt-zu-Punkt-Verbindung 28 eine Bluetooth-Low-Energy-Verbindung ist.

Die Punkt-zu-Punkt-Verbindung 28 wird mit einem als Smartphone ausgebildeten Bediengerät 30 hergestellt.

Zur Steuerung des Systems zur Hausautomatisation 10 kann eine (nicht gezeigte) Anwendung auf dem Bediengerät 30 verwendet werden, wodurch das Bediengerät 30 Daten mit Steuerbefehlen über die Punkt-zu-Punkt-Verbindung 28 an eine der Funkeinrichtungen 26 der Verbindungsgeräte 24 sendet. In dem Verbindungsgerät 24 folgt dann eine Umsetzung der empfangenen Daten derart, dass die Daten des Bediengeräts 30 an das Mesh-Netzwerk 22 weitergeleitet werden. Die Umsetzung der empfangenen Daten erfolgt durch eine nicht gezeigte Recheneinrichtung des Verbindungsgeräts 24.

In dem Mesh-Netzwerk 22 gelangen die Daten dann zu dem entsprechenden Endgerät 20, für welches die Daten vorgesehen sind. Das Endgerät 20 interpretiert die Daten des Bediengeräts 30 und führt dann eine gegebenenfalls benötigte Aktion durch. Bei der Aktion kann beispielsweise eine der Leuchten 12 oder die Jalousie 14 aktiviert werden.

Ebenfalls ist es beispielsweise möglich, dass der Helligkeitssensor 16 bzw. das zugehörige Endgerät 20 über das Mesh-Netzwerk 22 gemessene Helligkeitswerte an das Bediengerät 30 sendet. Die Helligkeitswerte werden dabei über das Mesh-Netzwerk 22 an das gerade mit dem Bediengerät 30 verbundene Verbindungsgerät 24 übermittelt. In dem Verbindungsgerät 24 werden die Daten des Helligkeitssensors 26 über die Punkt-zu-Punkt-Verbindung 28 an das Bediengerät 30 weitergeleitet, so dass das Bediengerät 30 dann beispielsweise die aktuelle Helligkeit korrekt anzeigen kann.

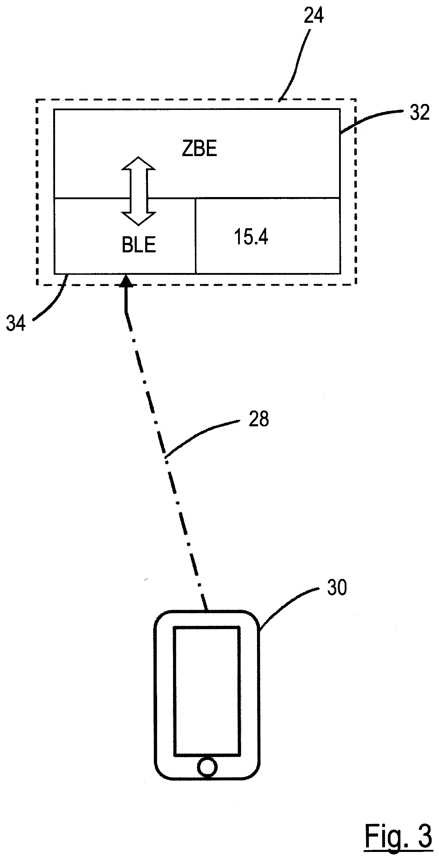

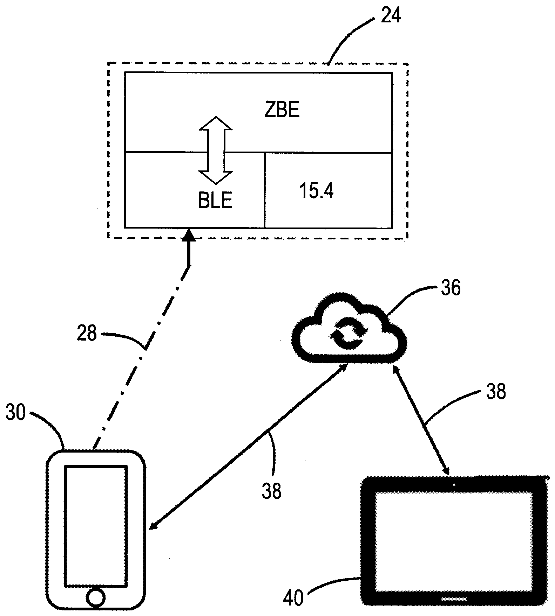

Fig. 3 zeigt nun den Anwendungsfall, dass eine Steuerung der Hausautomation von innerhalb des Wohnhauses 1 gewünscht ist. In Fig. 3 ist ein Verbindungsgerät 24 gezeigt, welches eine Punkt-zu-Punkt-Verbindung 28 mit dem Bediengerät 30 hergestellt hat. Das Verbindungsgerät 24 umfasst einen ZigBee-Kommunikationsstack 32. Der ZigBee-Kommunikationsstack 32 basiert auf IEEE 802.15.4 und weist eine Erweiterung auf, die ein Übertragen von Daten der Punkt-zu-Punkt-Verbindung 28 über das Mesh-Netzwerk 22 ermöglicht ("BLE over ZigBee").

Zudem umfasst das Verbindungsgerät 24 einen Bluetooth-Low-Energy-Kommunikations-Stack 34, welcher eine Kommunikation über Bluetooth Low Energy über die Punkt-zu-Punkt-Verbindung 28 ermöglicht.

Falls ein Benutzer auch von unterwegs die Endgeräte 20 steuern möchte, ist ein weiteres Gerät notwendig. Hierzu zeigt Fig. 4 einen Cloud-Dienst 36, welcher über eine Internetverbindung 38 sowohl mit dem Bediengerät 30 als auch mit einem als Tablet ausgebildeten weiteren Bediengerät 40 verbunden ist. **In** diesem Einsatzszenario öffnet das Bediengerät 30 einen Port für die Verbindung mit dem Cloud-Dienst 36. Das Bediengerät 30 fungiert also als Gateway zum Cloud-Dienst 36. Das weitere Bediengerät 40 kann dann mit dem Cloud-Dienst 36 kommunizieren, um beispielsweise Befehle für das Systeme zur Hausautomatisation 10 zu übertragen. Diese Befehle werden als Daten zunächst an den Cloud-Dienst 36, von dem Cloud-Dienst 36 an das Bediengerät 30 und von dem Bediengerät 30 mittels der Punkt-zu-Punkt-Verbindung 28 an das Verbindungsgerät 24 übertragen. In dem Verbindungsgerät 24 findet, wie in Bezug auf Fig. 2 und Fig. 3 bereits beschrieben, dann eine Weiterleitung an die Endgeräte 20 mittels des Mesh-Netzwerks 22 statt. Soll von einem Endgerät 20 an das weitere Bediengerät 40 eine Datenübertragung erfolgen, so wird der umgekehrte Weg beschritten.

Es ist also auch möglich, das System zur Hausautomatisation 10 von unterwegs, d.h. durch das weitere Bediengerät 40, zu steuern.

Grundsätzlich kommt das System 10 ohne eine spezielle Bridge aus, sondern ermöglicht es vielmehr, mit üblicherweise bereits vorhandener Hardware eine Bluetooth-Verbindung zu nahezu beliebigen als Verbindungsgeräte ausgebildeten Endgeräten 20 herzustellen. Die Investitionen in das System 10 können damit reduziert werden. Sogleich ergeben sich flexiblere Anwendungsmöglichkeiten für das System 10.

### Bezugszeichenliste

- 1: Wohnhaus
- 10: System
- 12: Leuchte
- 14: Jalousie
- 16: Helligkeitssensor
- 20: Endgerät
- 22: Mesh-Netzwerk
- 24: Verbindungsgerät
- 26: Funkeinrichtung
- 28: Punkt-zu-Punkt-Verbindung
- 30: Bediengerät
- 32: ZigBee-Kommunikationsstack
- 34: Bluetooth-Low-Energy-Kommunikationsstack
- 36: Cloud-Dienst
- 38: Internetverbindung
- 40: weiteres Bediengerät

## Patentansprüche

1. System zur Hausautomatisation (10), umfassend
- mehrere Endgeräte (20), welche miteinander über ein Mesh-Netzwerk (22) kommunizieren, wobei die Endgeräte (20) ausgebildet sind, Aktionen in der Hausautomation durchzuführen und/oder für die Hausautomation benötigte Daten zu erfassen,
- zumindest ein Verbindungsgerät (24), welches ausgebildet ist, mit den Endgeräten (20) über das Mesh-Netzwerk (22) zu kommunizieren, wobei das Verbindungsgerät (24) ausgebildet ist, mit einem Bediengerät (30) über eine direkte Punkt-zu-Punkt-Verbindung (28) zur Steuerung der Hausautomation zu kommunizieren und
das Verbindungsgerät (24) ausgebildet ist, eine bevorzugt direkte und/oder unmittelbare Kommunikation des Bediengeräts (30) mit zumindest einem Endgerät (20) zu ermöglichen, indem das Verbindungsgerät (24) von dem Bediengerät (30) über die Punkt-zu-Punkt-Verbindung (28) erhaltene Daten mittels des Mesh-Netzwerks (22) an das entsprechende Endgerät (20) weiterleitet und/oder von dem entsprechenden Endgerät (20) erhaltene Daten mittels der Punkt-zu-Punkt-Verbindung (28) an das Bediengerät (30) weiterleitet
**dadurch gekennzeichnet, dass**
das Verbindungsgerät (24) ausgebildet ist, ein über die Punkt-zu-Punkt-Verbindung (28) empfangenes Daten-Objekt in ein Daten-Objekt für das Mesh-Netzwerk (22) zu verpacken,
und/oder
das Verbindungsgerät (24) ausgebildet ist, ein über das Mesh-Netzwerk (22) empfangenes Daten-Objekt in ein Daten-Objekt für die Punkt-zu-Punkt-Verbindung (28) zu verpacken.

2. System (10) nach Anspruch 1,
wobei das Verbindungsgerät (24) ein Endgerät (20) ist.

3. System (10) nach einem der vorstehenden Ansprüche,
wobei das Verbindungsgerät (24) ausgebildet ist, beim Weiterleiten von Daten, in den Daten enthaltene Nutzdaten zumindest zum Teil unverändert zu belassen.

4. System (10) nach einem der vorstehenden Ansprüche,
wobei die Punkt-zu-Punkt-Verbindung (28) eine Bluetooth- oder Bluetooth-Low-Energy-Verbindung ist
und/oder
wobei das Mesh-Netzwerk (22) ein Zigbee-Netzwerk ist
und/oder
wobei das Bediengerät (30) ein Smartphone oder ein Tablet ist
und/oder
wobei das Endgerät (20) ein Leuchtmittel, ein elektrischer Schalter, ein Dimmer oder ein Sensor ist.

5. System (10) nach einem der vorstehenden Ansprüche,
wobei das Verbindungsgerät (24) eine Funkeinrichtung (26) aufweist und für die Punkt-zu-Punkt-Verbindung (28) und das Mesh-Netzwerk (22) dieselbe Funkeinrichtung (26) verwendet.

6. System (10) nach Anspruch 5,
wobei die Funkeinrichtung (26) ausgebildet ist, dieselbe Antennenanordnung für die Punkt-zu-Punkt-Verbindung (28) und das Mesh-Netzwerk (22) zu verwenden.

7. System (10) nach Anspruch 5 oder 6,
wobei die Funkeinrichtung (26) ausgebildet ist, Daten abwechselnd mittels eines Zeitschlitzverfahrens über die Punkt-zu-Punkt-Verbindung (28) und das Mesh-Netzwerk (22) zu senden und/oder zu empfangen.

8. System (10) nach einem der vorstehenden Ansprüche,
wobei das System (10) mehrere Verbindungsgeräte (24) umfasst, wobei das System (10) ausgebildet ist, genau eine Punkt-zu-Punkt-Verbindung (28) zwischen genau einem Verbindungsgerät (24) und dem Bediengerät (30) herzustellen.

9. System (10) nach einem der vorstehenden Ansprüche,
wobei das Bediengerät (30) ausgebildet ist, die von dem Endgerät (20) empfangenen Daten zu verarbeiten, und das Endgerät (20) ausgebildet ist, die von dem Bediengerät (30) empfangenen Daten zu verarbeiten.

10. System (10) nach einem der vorstehenden Ansprüche,
wobei das Bediengerät (30) ausgebildet ist, eine Verbindung mit einem Cloud-Dienst (36) herzustellen, wobei ein weiteres Bediengerät (40) mit dem Cloud-Dienst (36) kommuniziert, wobei Daten zur Steuerung der Endgeräte (20) mittels des Bediengeräts (30) von dem Cloud-Dienst (36) empfangen und über die Punkt-zu-Punkt-Verbindung (28) an das Verbindungsgerät (24) weitergeleitet werden.

11. System (10) nach einem der vorstehenden Ansprüche,
wobei eine Steuerung der Hausautomation
- eine direkte Steuerung eines Endgeräts (20),
- eine Automatisierung der Steuerung von einem oder mehreren Endgeräten (20),
- ein Auslesen von Zustandswerten eines Endgeräts (20), und/oder
- ein Verändern einer Soft- und/oder Firmware eines Endgeräts (20) umfasst.

12. Verfahren zur Hausautomatisation, bei welchem
- mehrere Endgeräte (20) miteinander über ein Mesh-Netzwerk (22) kommunizieren, - die Endgeräte (20) Aktionen in der Hausautomation durchführen und/oder für die Hausautomation benötigte Daten erfassen,
- zumindest ein Verbindungsgerät (24) mit den Endgeräten (20) über das Mesh-Netzwerk (22) kommuniziert,
wobei das Verbindungsgerät (24) mit einem Bediengerät (30) über eine direkte Punkt-zu-Punkt-Verbindung (28) zur Steuerung der Hausautomation kommuniziert und
das Verbindungsgerät (24) eine, bevorzugt direkte und/oder unmittelbare, Kommunikation des Bediengeräts (30) mit zumindest einem Endgerät (20) ermöglicht, indem das Verbindungsgerät (24) von dem Bediengerät (30) über die Punkt-zu-Punkt-Verbindung (28) erhaltene Daten mittels des Mesh-Netzwerks (22) an das entsprechende Endgerät (20) weiterleitet und/oder von dem entsprechenden Endgerät (20) erhaltene Daten mittels der Punkt-zu-Punkt-Verbindung (28) an das Bediengerät (30) weiterleitet,
**dadurch gekennzeichnet, dass**
das Verbindungsgerät (24) ein über die Punkt-zu-Punkt-Verbindung (28) empfangenes Daten-Objekt in ein Daten-Objekt für das Mesh-Netzwerk (22) verpackt
und/oder
das Verbindungsgerät (24) ein über das Mesh-Netzwerk (22) empfangenes Daten-Objekt in ein Daten-Objekt für die Punkt-zu-Punkt-Verbindung (28) verpackt.

## Claims

1. A home automation system (10) comprising
- a plurality of end devices (20) which communicate with one another via a mesh network (22), wherein the end devices (20) are configured to perform home automation actions and/or to collect data required for the home automation,
- at least one connection device (24) which is configured to communicate with the end devices (20) via the mesh network (22),
wherein the connection device (24) is configured to communicate with an operating unit (30) via a direct point-to-point connection (28) for controlling the home automation, and
the connection device (24) is configured to enable a communication, preferably a direct and/or immediate communication, of the operating unit (30) with at least one end device (20) in that the connection device (24) forwards data received from the operating unit (30) via the point-to-point connection (28) to the corresponding end device (20) by means of the mesh network (22) and/or forwards data received from the corresponding end device (20) to the operating unit (30) by means of the point-to-point connection (28),
**characterized in that**
the connection device (24) is configured to package a data object received via the point-to-point connection (28) into a data object for the mesh network (22),
and/or
the connection device (24) is configured to package a data object received via the mesh network (22) into a data object for the point-to-point connection (28).

2. A system (10) according to claim 1,
wherein the connection device (24) is an end device (20).

3. A system (10) according to one of the preceding claims,
wherein the connection device (24) is configured, when forwarding data, to leave use data included in the data at least partly unchanged.

4. A system (10) according to any one of the preceding claims,
wherein the point-to-point connection (28) is a Bluetooth connection or a Bluetooth Low Energy connection
and/or
wherein the mesh network (22) is a Zigbee network
and/or
wherein the operating unit (30) is a smartphone or a tablet
and/or
wherein the end device (20) is a light source, an electrical switch, a dimmer, or a sensor.

5. A system (10) according to any one of the preceding claims,
wherein the connection device (24) has a radio device (26) and uses the same radio device (26) for the point-to-point connection (28) and the mesh network (22).

6. A system (10) according to claim 5,
wherein the radio device (26) is configured to use the same antenna arrangement for the point-to-point connection (28) and the mesh network (22).

7. A system (10) according to claim 5 or 6,
wherein the radio device (26) is configured to alternately transmit and/or receive data by means of a time slot method via the point-to-point connection (28) and the mesh network (22).

8. A system (10) according to any one of the preceding claims,
wherein the system (10) comprises a plurality of connection devices (24), wherein the system (10) is configured to establish exactly one point-to-point connection (28) between exactly one connection device (24) and the operating unit (30).

9. A system (10) according to any one of the preceding claims,
wherein the operating unit (30) is configured to process the data received from the end device (20) and the end device (20) is configured to process the data received from the operating unit (30).

10. A system (10) according to any one of the preceding claims,
wherein the operating unit (30) is configured to establish a connection with a cloud service (36), wherein a further operating unit (40) communicates with the cloud service (36), wherein data for controlling the end devices (20) are received from the cloud service (36) by means of the operating unit (30) and are forwarded to the connection device (24) via the point-to-point connection (28).

11. A system (10) according to any one of the preceding claims,
wherein a control of the home automation comprises
- a direct control of an end device (20),
- an automation of the control of one or more end devices (20),
- a readout of state values of an end device (20), and/or
- a modification of software and/or firmware of an end device (20).

12. A method for home automation in which
- a plurality of end devices (20) communicate with one another via a mesh network (22),
- the end devices (20) perform home automation actions and/or collect data required for the home automation,
- at least one connection device (24) communicates with the end devices (20) via the mesh network (22),
wherein the connection device (24) communicates with an operating unit (30) via a direct point-to-point connection (28) for controlling the home automation, and
the connection device (24) enables a communication, preferably a direct and/or immediate communication, of the operating unit (30) with at least one end device (20) in that the connection device (24) forwards data received from the operating unit (30) via the point-to-point connection (28) to the corresponding end device (20) by means of the mesh network (22) and/or forwards data received from the corresponding end device (20) to the operating unit (30) by means of the point-to-point connection (28),
**characterized in that**
the connection device (24) packages a data object received via the point-to-point connection (28) into a data object for the mesh network (22), and/or
the connection device (24) packages a data object received via the mesh network (22) into a data object for the point-to-point connection (28).

## Revendications

1. Système d'automatisation domotique (10), comprenant
- une pluralité de terminaux (20) communiquant entre eux via un réseau maillé (22), lesdits terminaux (20) étant configurés pour effectuer des actions dans l'automatisation domotique et/ou pour acquérir les données nécessaires à l'automatisation domotique ;
- au moins un dispositif de connexion (24) configuré pour communiquer avec les terminaux (20) via le réseau maillé (22),
dans lequel
le dispositif de connexion (24) est configuré pour communiquer avec un dispositif de manipulation (30) via une connexion point à point directe (28) pour commander l'automatisation domotique, et
le dispositif de connexion (24) est configuré pour permettre une communication, de préférence directe et/ou immédiate, entre le dispositif de manipulation (30) et au moins un terminal (20) du fait que le dispositif de connexion (24) transmet les données, reçues du dispositif de manipulation (30) via la connexion point à point (28), au terminal correspondant (20) via le réseau maillé (22) et/ou transmet les données, reçues du terminal correspondant (20), au dispositif de manipulation (30) via la connexion point à point (28), **caractérisé en ce que**
le dispositif de connexion (24) est configuré pour conditionner un objet de données, reçu via la connexion point à point (28), dans un objet de données pour le réseau maillé (22),
et/ou
le dispositif de connexion (24) est configuré pour conditionner un objet de données, reçu via le réseau maillé (22), dans un objet de données pour la connexion point à point (28).

2. Système (10) selon la revendication 1,
dans lequel le dispositif de connexion (24) est un terminal (20).

3. Système (10) selon l'une des revendications précédentes,
dans lequel le dispositif de connexion (24) est configuré pour laisser les données utiles, contenues dans les données, au moins en partie inchangées lors de la transmission des données.

4. Système (10) selon l'une des revendications précédentes,
dans lequel la connexion point à point (28) est une connexion Bluetooth ou Bluetooth Low Energy,
et/ou
le réseau maillé (22) est un réseau Zigbee,
et/ou
le dispositif de manipulation (30) est un smartphone ou une tablette,
et/ou
le terminal (20) est un moyen d'éclairage, un interrupteur électrique, un gradateur de lumière ou un capteur.

5. Système (10) selon l'une des revendications précédentes,
dans lequel le dispositif de connexion (24) comprend un dispositif radio (26) et utilise le même dispositif radio (26) pour la connexion point à point (28) et pour le réseau maillé (22).

6. Système (10) selon la revendication 5,
dans lequel le dispositif radio (26) est configuré pour utiliser le même agencement d'antenne pour la connexion point à point (28) et pour le réseau maillé (22).

7. Système (10) selon la revendication 5 ou 6,
dans lequel le dispositif radio (26) est configuré pour émettre et/ou recevoir des données en alternance selon un procédé à créneaux temporels via la connexion point à point (28) et via le réseau maillé (22).

8. Système (10) selon l'une des revendications précédentes,
dans lequel le système (10) comprend une pluralité de dispositifs de connexion (24),
le système (10) est configuré pour établir précisément une connexion point à point (28) entre précisément un dispositif de connexion (24) et le dispositif de manipulation (30).

9. Système (10) selon l'une des revendications précédentes,
dans lequel le dispositif de manipulation (30) est configuré pour traiter les données reçues du terminal (20), et le terminal (20) est configuré pour traiter les données reçues du dispositif de manipulation (30).

10. Système (10) selon l'une des revendications précédentes,
dans lequel le dispositif de manipulation (30) est configuré pour établir une connexion avec un service informatique en nuage (36),
un autre dispositif de manipulation (40) communique avec le service informatique en nuage (36),
les données de commande des terminaux (20) sont reçues du service informatique en nuage (36) au moyen du dispositif de manipulation (30) et sont transmises au dispositif de connexion (24) via la connexion point à point (28).

11. Système (10) selon l'une des revendications précédentes,
dans lequel la commande de l'automatisation domotique comprend
- une commande directe d'un terminal (20),
- une automatisation de la commande d'un ou plusieurs terminaux (20),
- une lecture des valeurs d'état d'un terminal (20), et/ou
- une modification du logiciel et/ou du micrologiciel d'un terminal (20).

12. Procédé d'automatisation domotique, dans lequel
- plusieurs terminaux (20) communiquent entre eux via un réseau maillé (22),
- les terminaux (20) effectuent des actions dans l'automatisation domotique et/ou acquièrent les données nécessaires à l'automatisation domotique,
- au moins un dispositif de connexion (24) communique avec les terminaux (20) via le réseau maillé (22),
dans lequel
le dispositif de connexion (24) communique avec un dispositif de manipulation (30) via une connexion point à point directe (28) pour commander l'automatisation domotique, et
le dispositif de connexion (24) permet une communication, de préférence directe et/ou immédiate, entre le dispositif de manipulation (30) et au moins un terminal (20) du fait que le dispositif de connexion (24) transmet les données, reçues du dispositif de manipulation (30) via la connexion point à point (28), au terminal correspondant (20) via le réseau maillé (22) et/ou transmet les données, reçues du terminal correspondant (20), au dispositif de manipulation (30) via la connexion point à point (28),
**caractérisé en ce que**
le dispositif de connexion (24) conditionne un objet de données, reçu via la connexion point à point (28), dans un objet de données pour le réseau maillé (22),
et/ou
le dispositif de connexion (24) conditionne un objet de données, reçu via le réseau maillé (22), dans un objet de données pour la connexion point à point (28).
